(19) Europäisches Patentamt
European Patent Office
Office européen des brevets

(11) **EP 4 207 764 A1**

(12) **EUROPEAN PATENT APPLICATION**

(43) Date of publication:
**05.07.2023 Bulletin 2023/27**

(21) Application number: **22213754.9**

(22) Date of filing: **15.12.2022**

(51) International Patent Classification (IPC):
**H04N 19/597** (2014.01)    **H04N 19/70** (2014.01)

(52) Cooperative Patent Classification (CPC):
**H04N 19/597; H04N 19/70**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.12.2021 FI 20216380**

(71) Applicant: **Nokia Technologies Oy
02610 Espoo (FI)**

(72) Inventors:
• **RONDAO ALFACE, Patrice
Evere (BE)**
• **NAIK, Deepa
Tampere (FI)**
• **MALAMAL VADAKITAL, Vinod Kumar
Tampere (FI)**

(74) Representative: **Nokia EPO representatives
Nokia Technologies Oy
Karakaari 7
02610 Espoo (FI)**

(54) **AN APPARATUS, A METHOD AND A COMPUTER PROGRAM FOR VOLUMETRIC VIDEO**

(57)    There are disclosed methods, apparatuses and computer program products for volumetric video compression. In accordance with an embodiment, the method for encoding comprises obtaining a basic view and one or more additional views of a volumetric video content; forming patches from the basic view and one or more additional views; packing patches into one or more regions of an atlas; encoding the one or more regions of the atlas; reconstructing patches from the encoded atlas; selecting a reference view; forming residual data based on the reconstructed patches and the reference view; and encoding the residual data. In accordance with an embodiment, the method for decoding comprises decoding residual data regarding reconstructed patches and a reference view; obtaining the reference view; forming patches of an atlas from the decoding residual data and the reference view; and reconstructing a basic view and one or more additional views of a volumetric video content from the patches.

EP 4 207 764 A1

Fig. 3a

**Description**

TECHNICAL FIELD

The present invention relates to an apparatus, a method and a computer program for volumetric video compression.

BACKGROUND

In the field of volumetric video coding, a set of geometry (depth) and attribute information (texture, occupancy, normals, transparency etc) is captured or estimated from a set of sparse input camera. One of the goals of the MPEG-I Immersive Video (MIV) is to project regions of a 3D scene into 2D patches, organize these patches into atlases, and provide the required metadata along with coded video bitstreams which would enable a client to synthesize dense views in a so-called "viewing volume". A viewer can observe the surrounding scene from any position and angle within the viewing volume. The fact that the viewer can freely move and rotate his/her head and observe the correctly rendered scene at any time in a fluid manner is often called a 6-DoF experience (six degrees of freedom).

MIV is agnostic of a video encoder and a MIV decoder cannot make the same predictions as the MIV encoder, because in the encoder the basic view texture and depth pixels are uncompressed, whereas in a MIV decoder basic view's texture and geometry pixels are reconstructed from decoded atlases with compression distortions. These differences in prediction may be called as "drift".

SUMMARY

Now, an improved method and technical equipment implementing the method has been invented. The method and technical equipment implementing the method aim to improve specifically aspects of prediction at an encoder and a decoder of the MPEG-I Immersive Video (MIV). A non-limiting example of the encoder and decoder is an encoder/decoder of a so-called test model of the MPEG-I Immersive Video (TMIV). Various aspects include a method, an apparatus and a computer readable medium comprising a computer program, or a signal stored therein, which are characterized by what is stated in the independent claims. Various details of the embodiments are disclosed in the dependent claims and in the corresponding images and description.

The scope of protection sought for various embodiments of the invention is set out by the independent claims. The embodiments and features, if any, described in this specification that do not fall under the scope of the independent claims are to be interpreted as examples useful for understanding various embodiments of the invention.

In accordance with some embodiments, the following methods may address the above-mentioned issues to improve operation of both the MIV encoder and a MIV decoder.

In order to enable closed loop prediction (i.e. same predictions at encoder and decoder), a shared reconstructed atlas buffer may be utilized that is shared between the MIV encoder and the video encoder. The encoder can then use the same reconstructed pixels as the decoder.

In accordance with several embodiments, different levels of granularity of the shared reconstructed atlas buffer for various types of video codecs may be utilized. For example, the shared reconstructed atlas buffer may be implemented at slice/tile-level, at a sub-picture-level, and/or at a layer-level.

In accordance with an approach, the prediction mechanism which can be used in closed loop at MIV encoder and decoder is based on warping as an interview-prediction mechanism.

It should be noted that the video encoder predictions and the prediction for MIV may be independent from each other. Hence, the MIV prediction mechanism described in this specification does not depend on what intra or inter-predictions the video encoder performs, in the same way, the video encoder does not depend on MIV metadata and processes with the exception of the following:

- The MIV encoder fills atlases that are the input of the video encoder;
- The reconstructed atlas buffer of the video encoder is an input of the MIV encoder;
- The Video encoder can be configured to process atlas frames with some random access pattern into separate regions such as tiles (HEVC) or sub-pictures (VVC), or layers (layered VVC, SHVC etc) and that these different regions can be encoded sequentially.
- There is an orchestration mechanism that governs read/writes in both atlases and reconstructed atlases that is based on the aforementioned separate regions configuration.

In other words, a mutex orchestration mechanism for the read/write operations on the atlases and shared reconstructed atlas buffer is utilized as well as a video codec that exhibits a functionality similar to slices/tiles/sub-pictures between which no intra prediction is possible for the same temporal frame, as well as a reference list mechanism for the MIV prediction.

The described prediction mechanism is agnostic of the video encoding technology chosen. Therefore, any video codec may be compatible, such as H264/AVC, H265/HEVC, H266/VVC, VP8, VP9, AV-1 or layered extensions of these standards (SVC, SHVC...), or even image codecs such as JPEG2000 etc.

It should also be noted that a finer granularity than an atlas frame is desirable for the MIV predictions: higher efficiency can be obtained with "per-view" granularity (in the sense of the MIV view indexes), or per "cluster of views" granularity (in the sense of MIV pruning graph nodes and sets of nodes) that can be orchestrated for example by the MIV pruning graph information itself or additional structures enabling reference list indexing. Otherwise, other packings into separate coding regions are possible by exploiting, for example, layered codecs with for example temporal scalability, where views are then mapped to a different scalability layer, or other video-codec specific features, for example, auxiliary pictures.

An advantage of some embodiments is to reduce bitrate when prediction of depth and texture from parent views in the MIV pruning graph can be encoded.

According to a first aspect, there is provided an apparatus comprising means for:

>    obtaining a basic view and one or more additional views of a volumetric video content;
>    forming patches from the basic view and one or more additional views;
>    packing patches into one or more regions of an atlas;
>    encoding the one or more regions of the atlas;
>    reconstructing patches from the encoded atlas;
>    selecting a reference view;
>    forming residual data based on the reconstructed patches and the reference view; and
>    encoding the residual data.

A method according to a second aspect comprises:

>    obtaining a basic view and one or more additional views of a volumetric video content;
>    forming patches from the basic view and one or more additional views;
>    packing patches into one or more regions of an atlas;
>    encoding the one or more regions of the atlas;
>    reconstructing patches from the encoded atlas;
>    selecting a reference view;
>    forming residual data based on the reconstructed patches and the reference view; and
>    encoding the residual data.

An apparatus according to a third aspect comprises at least one processor and at least one memory, said at least one memory stored with computer program code thereon, the at least one memory and the computer program code configured to, with the at least one processor, cause the apparatus at least to perform:

>    obtain a basic view and one or more additional views of a volumetric video content;
>    form patches from the basic view and one or more additional views;
>    pack patches into one or more regions of an atlas;
>    encode the one or more regions of the atlas;
>    reconstruct patches from the encoded atlas;
>    select a reference view;
>    form residual data based on the reconstructed patches and the reference view; and
>    encode the residual data.

According to a fourth aspect there is provided a computer readable storage medium stored with code thereon for use by an apparatus, which when executed by a processor, causes the apparatus to perform:

>    obtain a basic view and one or more additional views of a volumetric video content;
>    form patches from the basic view and one or more additional views;
>    pack patches into one or more regions of an atlas;
>    encode the one or more regions of the atlas;
>    reconstruct patches from the encoded atlas;
>    select a reference view;

form residual data based on the reconstructed patches and the reference view; and
encode the residual data.

According to a fifth aspect, there is provided an apparatus comprising means for:

decoding residual data regarding reconstructed patches and a reference view;
obtaining the reference view;
forming patches of an atlas from the decoding residual data and the reference view; and
reconstructing a basic view and one or more additional views of a volumetric video content from the patches.

A method according to a sixth aspect comprises:

decoding residual data regarding reconstructed patches and a reference view;
obtaining the reference view;
forming patches of an atlas from the decoding residual data and the reference view; and
reconstructing a basic view and one or more additional views of a volumetric video content from the patches.

An apparatus according to a seventh aspect comprises at least one processor and at least one memory, said at least one memory stored with computer program code thereon, the at least one memory and the computer program code configured to, with the at least one processor, cause the apparatus at least to perform:

decode residual data regarding reconstructed patches and a reference view;
obtain the reference view;
form patches of an atlas from the decoding residual data and the reference view; and
reconstruct a basic view and one or more additional views of a volumetric video content from the patches.

According to an eighth aspect there is provided a computer readable storage medium stored with code thereon for use by an apparatus, which when executed by a processor, causes the apparatus to perform:

decode residual data regarding reconstructed patches and a reference view;
obtain the reference view;
form patches of an atlas from the decoding residual data and the reference view; and
reconstruct a basic view and one or more additional views of a volumetric video content from the patches.

According to a ninth aspect there is provided an apparatus comprising at least one processor and at least one memory, said at least one memory stored with computer program code thereon, the at least one memory and the computer program code configured to, with the at least one processor, cause the apparatus at least to perform:

decode residual data regarding reconstructed patches and a reference view;
obtain the reference view;
form patches of an atlas from the decoding residual data and the reference view; and
reconstruct a basic view and one or more additional views of a volumetric video content from the patches.

## BRIEF DESCRIPTION OF THE DRAWINGS

For a more complete understanding of the example embodiments, reference is now made to the following descriptions taken in connection with the accompanying drawings in which:

Fig. 1 illustrates as a simplified block diagram an example of a pipeline for MPEG-I Immersive Video from encoding input views, texture and geometry at an encoder to decoding at a decoder, in accordance with an embodiment;
Fig. 2a illustrates a closed loop prediction mechanism for geometry data at an encoder, in accordance with an embodiment;
Fig. 2b illustrates the closed loop prediction mechanism for texture data at the encoder, in accordance with an embodiment;
Fig. 2c illustrates the closed loop prediction mechanism for geometry data at the decoder, in accordance with an embodiment;
Fig. 2d illustrates the closed loop prediction mechanism for texture data at the decoder, in accordance with an embodiment;

Fig. 3a illustrates orchestration of a MIV encoder and a video encoder for a temporal atlas frame of a MIV sequence, in accordance with an embodiment.
Fig. 3b shows a link between the MIV pruning graph and the mapping of regions in the produced atlases on
Fig. 4a illustrates an example of an apparatus;
Fig. 4b illustrates an example of another apparatus; and
Fig. 5 shows a schematic diagram of an example multimedia communication system within which various embodiments may be implemented.

## DETAILED DESCRIPTON OF SOME EXAMPLE EMBODIMENTS

In the following, several embodiments of the invention will be described in the context of omnidirectional and immersive video coding.

Volumetric video data represents a three-dimensional scene or object and can be used as input for augmented reality (AR), virtual reality (VR) and mixed reality (MR) applications. Such data describes geometry (shape, size, position in 3D-space) and respective attributes (e.g. colour, opacity, reflectance, ...), plus any possible temporal changes of the geometry and attributes at given time instances (like frames in 2D video). Volumetric video is either generated from 3D models, i.e. computer-generated imagery (CGI), or captured from real-world scenes using a variety of capture solutions, e.g. multi-camera, laser scan, combination of video and dedicated depth sensors, and more. Also, a combination of CGI and real-world data is possible. Typical representation formats for such volumetric data are triangle meshes, point clouds, or voxel. Temporal information about the scene can be included in the form of individual capture instances, i.e. "frames" in 2D video, or other means, e.g. position of an object as a function of time. Because volumetric video describes a 3D scene (or object), such data can be viewed from any viewpoint. Therefore, volumetric video is an important format for any AR, VR, or MR applications, especially for providing 6DOF viewing capabilities.

Increasing computational resources and advances in 3D data acquisition devices has enabled reconstruction of highly detailed volumetric video representations of natural scenes. Infrared, lasers, time-of-flight and structured light are all examples of devices that can be used to construct 3D video data. Representation of the 3D data depends on how the 3D data is used. Dense Voxel arrays have been used to represent volumetric medical data. In 3D graphics, polygonal meshes are extensively used. Point clouds on the other hand are well suited for applications such as capturing real world 3D scenes where the topology is not necessarily a 2D manifold. Another way to represent 3D data is coding this 3D data as set of texture and depth map as is the case in the multi-view plus depth. Closely related to the techniques used in multi-view plus depth is the use of elevation maps, and multi-level surface maps.

In dense point clouds or voxel arrays, the reconstructed 3D scene may contain tens or even hundreds of millions of points. If such representations are to be stored or interchanged between entities, then efficient compression becomes essential. Standard volumetric video representation formats, such as point clouds, meshes, voxel, suffer from poor temporal compression performance. Identifying correspondences for motion-compensation in 3D-space is an ill-defined problem, as both, geometry and respective attributes may change. For example, temporal successive "frames" do not necessarily have the same number of meshes, points or voxel. Therefore, compression of dynamic 3D scenes is inefficient. 2D-video based approaches for compressing volumetric data, i.e. multiview and depth, have much better compression efficiency, but rarely cover the full scene. Therefore, they provide only limited 6DOF capabilities.

Alternatively, a 3D scene, represented as meshes, points, and/or voxel, can be projected onto one, or more, geometries. These geometries are "unfolded" onto 2D planes with two planes per geometry, one plane for texture and one plane for depth. The 2D planes are then encoded using standard 2D video compression technologies. Relevant projection geometry information is transmitted along with the encoded video files to the decoder. The decoder decodes the video and performs the inverse projection to regenerate the 3D scene in any desired representation format (not necessarily the starting format). Projecting volumetric models onto 2D planes allows for using standard 2D video coding tools with efficient temporal compression. Thus, coding efficiency is increased. Using geometry-projections instead of prior 2D-video based approaches, e.g. multiview and depth, provide a better coverage of the scene or object. Thus, 3DOF+ (e.g., 6DoF) capabilities are improved. Using several geometries for individual objects further improves the coverage of the scene. Furthermore, standard video encoding hardware can be utilized for real-time compression/decompression of the projected planes. The projection and reverse projection steps are of low complexity.

According to some embodiments, volumetric video compression can often generate an array of patches by decomposing the point cloud data into a plurality of patches. The patches are mapped to a 2D grid and, in some instances, an occupancy map is generated from any of a variety of attributes (such as one of a color attribute, a depth attribute, a geometry attribute, a reflectance attribute, a roughness attribute, a transparency attribute, a metalness attribute, a specularity attribute, a surface normals attribute, a material attribute of the volumetric video scene, and the like), where occupied pixels are pixels which have valid attribute values, e.g., depth values and/or color values. Geometry images, texture images and/or the like may then be generated for subsequent storage and/or transmission. In some embodiments, the compressed images may thereafter be decompressed and the geometry and texture may be reconstructed, such that the image may then be viewed.

In projection-based volumetric video compression, a 3D surface is projected onto a 2D grid. The 2D grid has a finite resolution. Thus, in some embodiments, two or more points of the 3D surface may be projected on the same 2D pixel location. The image generation process exploits the 3D to 2D mapping to store the geometry and texture of the point cloud as images. In order to address multiple points being projected to the same pixel, each patch is projected onto two images, referred to as layers (or maps). In some instances, the first geometry layer is encoded as it is and the second geometry layer is encoded as a delta to the first layer. Texture frames may be generated similarly, but both texture layer 1 and layer 2 may be encoded as separated texture frames.

In an effort to retain the high frequency features, one approach involves absolute coding with reconstruction correction. Another approach to retain the high frequency features involves geometry-based point interpolation. In some embodiments, the compression efficiency of geometry images is improved by replacing some of the geometry information explicitly encoded using geometry images by a point interpolation algorithm.

In contrast to traditional 2D cameras enabling to capture a relatively narrow field of view, three-dimensional (3D) cameras are able to capture visual and audio content all around them, i.e. they can capture the whole angular field of view, sometimes referred to as 360 degrees field of view. More precisely, they can capture a spherical field of view (i.e., 360 degrees in all spatial directions). Furthermore, new types of output devices, such as head-mounted displays (HMD), and other devices, allow a person to see the 360-degree visual content.

Available media file format standards include International Standards Organization (ISO) base media file format (ISO/IEC 14496-12, which may be abbreviated ISOBMFF), Moving Picture Experts Group (MPEG)-4 file format (ISO/IEC 14496-14, also known as the MP4 format), file format for NAL (Network Abstraction Layer) unit structured video (ISO/IEC 14496-15) and High Efficiency Video Coding standard (HEVC or H.265/HEVC).

Some concepts, structures, and specifications of ISOBMFF are described below as an example of a container file format, based on which the embodiments may be implemented. The aspects of the invention are not limited to ISOBMFF, but rather the description is given for one possible basis on top of which the invention may be partly or fully realized.

In the following, term "omnidirectional" may refer to media content that may have greater spatial extent than a field-of-view of a device rendering the content. Omnidirectional content may for example cover substantially 360 degrees in the horizontal dimension and substantially 180 degrees in the vertical dimension, but omnidirectional may also refer to content covering less than 360 degree-view in the horizontal direction and/or 180 degree-view in the vertical direction.

A panoramic image covering a 360-degree field-of-view horizontally and a 180-degree field-of-view vertically can be represented by a sphere that has been mapped to a two-dimensional image plane using the equirectangular projection (ERP). In this case, the horizontal coordinate may be considered equivalent to a longitude, and the vertical coordinate may be considered equivalent to a latitude, with no transformation or scaling applied. In some cases, panoramic content with a 360-degree horizontal field-of-view, but with less than a 180-degree vertical field-of-view may be considered special cases of equirectangular projection, where the polar areas of the sphere have not been mapped onto the two-dimensional image plane. In some cases, panoramic content may have less than a 360-degree horizontal field-of-view and up to a 180-degree vertical field-of-view, while otherwise having the characteristics of an equirectangular projection format.

Immersive multimedia, such as omnidirectional content consumption is more complex for the end user compared to the consumption of 2D content. This is due to the higher degree of freedom available to the end user. The freedom also results in more uncertainty. The MPEG Omnidirectional Media Format (OMAF; ISO/IEC 23090-2) v1 standardized the omnidirectional streaming of single 3DoF (3 Degrees of Freedom) content (where the viewer is located at the centre of a unit sphere and has three degrees of freedom (Yaw-Pitch-Roll). The following phase standardization OMAFv2 is expected to enable multiple 3DoF and 3DoF+ content consumption with user interaction and means to optimize the Viewport Dependent Streaming (VDS) operations and bandwidth management.

The MPEG-I project (ISO/IEC 23090) on coded representation of immersive media includes ISO/IEC 23090-12 Immersive Video (MIV) that is designed to support 6-DoF rendering. MIV uses ISO/IEC 23090-5 Video-based Point Cloud Compression (V-PCC) as a normative reference for terms, definitions, syntax, semantics and decoding processes. Since the 130th MPEG meeting Part 5 was restructured in a common specification Visual Volumetric Video-based Coding (V3C) and annex H Video-based Point Cloud Compression (V-PCC). V3C provides extension mechanisms for V-PCC and MIV.

The normative decoding process for MPEG Immersive Video (MIV) is specified in the Final Draft International Standard of MPEG Immersive Video (FDIS). A test model of the MPEG-I Immersive Video (TMIV) provides a reference implementation of non-normative encoding and rendering techniques and the normative decoding process for the MIV standard.

A viewport may be defined as a region of omnidirectional image or video suitable for display and viewing by the user. A current viewport (which may be sometimes referred simply as a viewport) may be defined as the part of the spherical video that is currently displayed and hence is viewable by the user(s). At any point of time, a video rendered by an application on a head-mounted display (HMD) renders a portion of the 360-degrees video, which is referred to as a viewport. Likewise, when viewing a spatial part of the 360-degree content on a conventional display, the spatial part that is currently displayed is a viewport. A viewport is a window on the 360-degree world represented in the omnidirectional video displayed via a rendering display. A viewport may be characterized by a horizontal field-of-view (VHFoV) and a vertical field-of-view (VVFoV).

The 360-degree space may be divided into a discrete set of viewports, each separated by a given distance (e.g., expressed in degrees), so that the omnidirectional space can be imagined as a map of overlapping viewports, and the viewport is switched discretely as the user changes his/her orientation while watching content with a head-mounted display (HMD). When the overlapping between viewports is reduced to zero, the viewports can be imagined as adjacent non-overlapping tiles (patches) within the 360-degrees space.

When streaming VR video, a subset of 360-degree video content covering the viewport (i.e., the current view orientation) may be transmitted at the best quality/resolution, while the remaining of 360-degree video may be transmitted at a lower quality/resolution. This is what characterizes a VDS systems, as opposed to a Viewport Independent Streaming system, where the omnidirectional video is streamed at high quality in all directions.

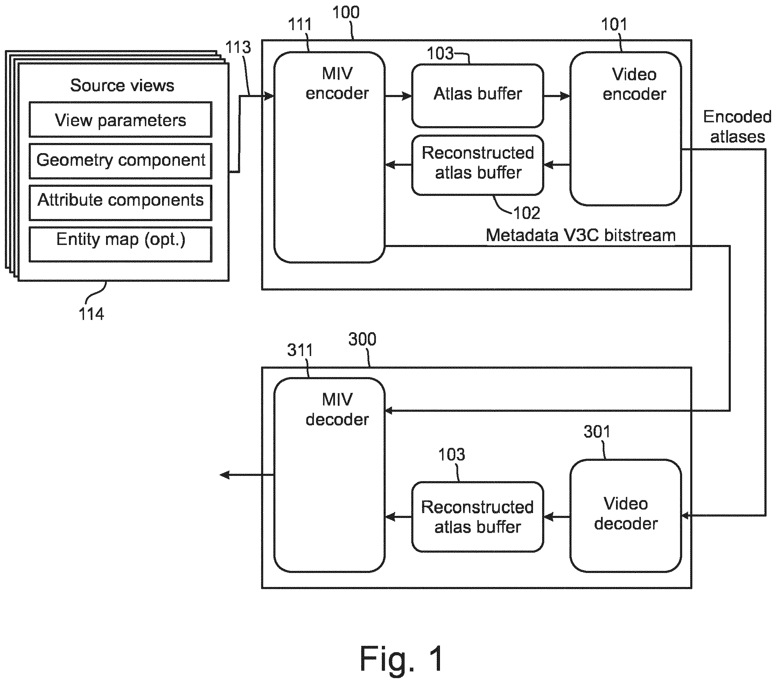

Fig. 1 illustrates as a simplified block diagram an example of a pipeline for MPEG-I Immersive Video from encoding input views, texture and geometry at an encoder 100, to decoding at a decoder 300, in accordance with an embodiment. The encoder 100 comprises two encoding sections: a first encoding section 111 implementing the MPEG-I Immersive Video, which may also be called as a MIV encoder, and a second encoding section 101 implementing the other video encoding aspects, which may also be called as a video encoder in this specification. The MIV encoder 111 has a reconstructed atlas buffer 102 and an atlas buffer 103 which both are also accessible by the video encoder 101 for writing. In other words, it can be regarded that the reconstructed atlas buffer 102 and the atlas buffer 103 are shared by both the MIV encoder 111 and the video encoder 101. The MIV encoder 111 can use the atlas buffer 113 for storing generated atlases to be used by the video encoder 101 and the reconstructed atlas buffer 102 as prediction reference data. The decoder 300 comprises two decoding sections: a first decoding section 311 implementing video decoding aspects for decoding the encoded video, and a second encoding section 301 implementing the decoding operations of the test model of the MPEG-I Immersive Video. The first decoding section may also be called as a video decoder 301 and the second encoding section may also be called as a MIV decoder 311 in this specification.

An input 113 to the MIV encoder comprises of a list of source views 114. The source views represent projections, such as equirectangular, perspective, or orthographic projection, of a 3D real or virtual scene. The source views are associated with view parameters like camera intrinsics, camera extrinsics, geometry quantization, etc. A source view may have a geometry component and may also have a texture attribute component. Additional optional attributes per source view may comprise an entity map and a transparency attribute component.

Source views can be divided into multiple groups, for example to help outputting local coherent projections of important regions (e.g., belonging to foreground objects or occluded regions) in the atlases per group as opposed to having fewer samples of those regions when processing all source views as a single group. An automatic process may be implemented to select views per group, based on the view parameters list and the number of groups to obtain. The source views are being distributed accordingly in multiple branches, and each group is encoded independently of each other.

The MIV encoder 111 produces a single file according to the V3C sample stream format containing a single V3C sequence. The MIV encoder 111 also produces a bitstream carrying metadata of the V3C'.

The atlas data generated by the MIV encoder 111 and possibly stored in the atlas buffer 103, is provided to the video encoder 101 which generates encoded atlases for transmission to the decoder 300. The bitstream carrying metadata of the V3C may also be delivered to the decoder 300.

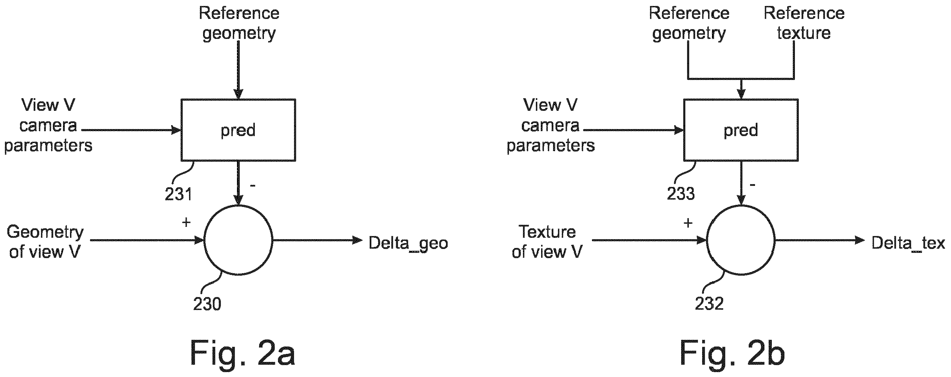

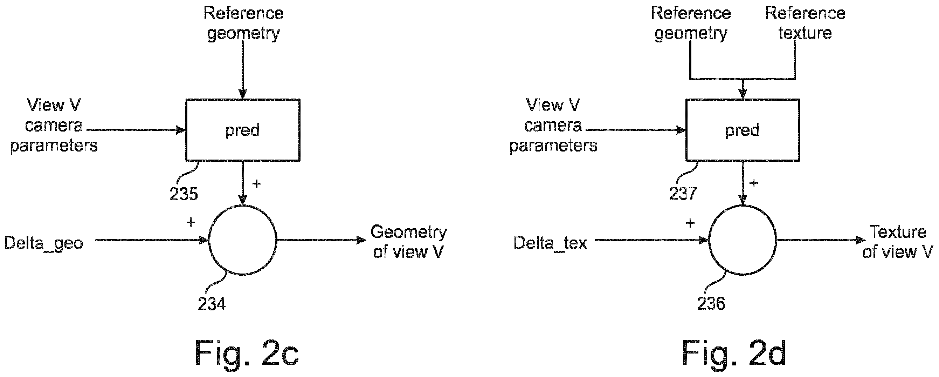

The prediction mechanism that can be used in closed loop at the encoder 100 and the decoder 300 is based on warping as an interview-prediction mechanism. Fig. 2a illustrates the closed loop prediction mechanism for geometry data at the encoder 100 and Fig. 2b illustrates the closed loop prediction mechanism for texture data at the encoder 100. Respectively, Fig. 2c illustrates the closed loop prediction mechanism for geometry data at the decoder 300 and Fig. 2d illustrates the closed loop prediction mechanism for texture data at the decoder 300.

At the encoder 100, the geometry data of a view V is input to a first combiner 230. A reference geometry is selected for the view V. The camera parameters of the view V and the reference geometry data are provided to a geometry predictor 231. The prediction function pred warps the reference geometry data based on camera parameters of the view V and parameters of the reference geometry (reference view) so that the prediction reference geometry data generated by the prediction function has as close correspondence (e.g. orientation, size) with the view V as possible. Then, the output of the geometry predictor 231, i.e. the prediction reference geometry data, is provided to the first combiner 230 which subtracts the output of the geometry predictor 231 from the geometry data of view V. The result of the subtraction is a difference **Delta_geo** between the actual geometry data of the view V and the prediction of the geometry data of the view V (reference geometry data). The difference **Delta_geo** is the difference geometry signal to be encoded by the video encoder 101.

The texture data of a view V is input to a second combiner 232. Camera parameters of the view V, reference texture data and reference geometry data are provided to a texture predictor 233, which uses a prediction function **pred** based on warping of known reference views. The output of the texture predictor 233 is provided to the second combiner 232 which subtracts the output of the texture predictor 233 from the texture data of view V. The result of the subtraction is a difference **Delta_tex** between the actual texture data of the view V and the prediction of the texture data of the view V (reference texture data). The difference **Delta_tex** is the difference texture signal to be encoded by the video encoder 210.

At the decoder 300, the residual data of a view V (delta_geo) is decoded and extracted from atlases. Then, the residual data of a view V is input to a third combiner 234. A reference geometry is selected for the view V. The camera parameters of the view V and the reference geometry data are provided to a geometry predictor 235. The prediction function **pred** warps the reference geometry data based on camera parameters of the view V and parameters of the reference geometry (reference view) so that the prediction reference geometry data generated by the prediction function has as close correspondence (e.g. orientation, size) with the view V as possible. Then, the output of the geometry predictor 235, i.e. the prediction reference geometry data, is provided to the third combiner 234 which adds the output of the geometry predictor 235 with the residual geometry data of view V. The result of the addition is a reconstructed geometry view V.

The texture data of a view V is input to a fourth combiner 236. Camera parameters of the view V, reference texture data and reference geometry data are provided to a texture predictor 237, which uses a prediction function **pred** based on warping of known reference views. The output of the texture predictor 237 is provided to the second combiner 236 which adds the output of the texture predictor 237 with the residual texture data of view V. The result of the addition is a reconstructed texture view V.

The prediction mechanism can be expressed with the following equations and can be utilized both at the encoder 100 and the decoder 300:

$$\text{Geometry\_view\_V}(p) = \text{prediction}(\text{reference geometry, View V params}) + \text{delta\_geo}(p)$$

$$\text{Texture\_view\_V}(p) = \text{prediction}(\text{reference geometry and texture, View V params}) + \text{delta\_tex}(p)$$

where p can either be a pixel or a patch,
**pred** is the prediction function based on warping of known reference views
**delta** is the difference signal to be encoded.

The reference geometry and reference texture are selected in the shared reconstructed atlas buffer so that the same reconstructed values are used at the MIV encoder 111 and MIV decoder 311.

In the following a set of embodiments are described where the MIV encoder 111 packs patches into several independently coded regions of at least one atlas, where each of these regions corresponds to a set of nodes of the MIV pruning graph, each region being uniquely identified by a reference_index and where the geometry atlas data is predicted by means of a reference geometry that is to be found in the reconstructed geometry atlas region identified by a given reference_index. Also the attribute atlas data is predicted by means of a reference geometry and a reference attribute data that is to be found in the reconstructed geometry and respectively reconstructed attribute atlas regions identified by a given reference index. The video encoder 101 encodes sequentially each region of the MIV generated atlases in a pre-defined order and writes the result in the shared reconstructed atlases, so that the MIV encoder 111 can read the available reconstructed regions.

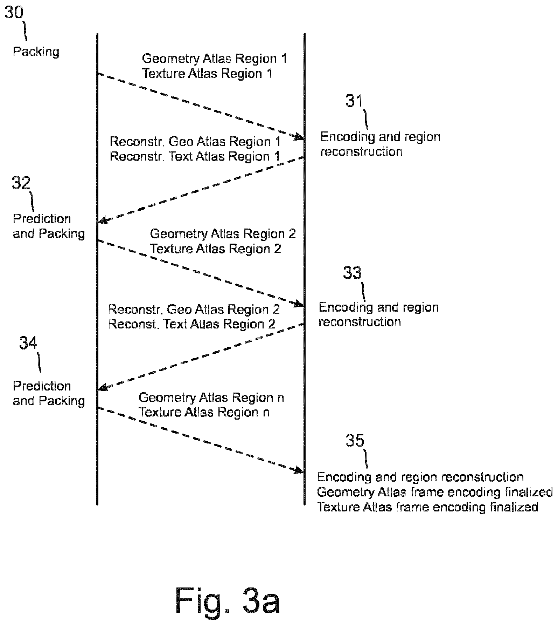

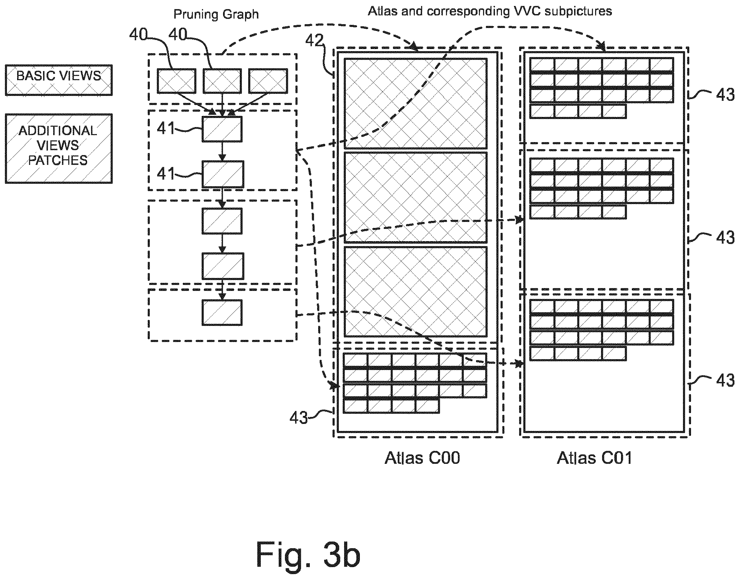

In the following, this orchestration and sequential encoding mechanism principle are described with reference to Fig. 3a and the link between the MIV pruning graph and the mapping of regions in the produced atlases on Fig. 3b.

In the example of Fig. 3a, the MIV encoder 111 prepares by packing 30 a first region of the geometry and texture atlases and stores them e.g. to the atlas buffer 103. Then the video encoder 101 encodes and generates 31 the reconstructed region into the reconstructed geometry and texture atlases, which may be stored e.g. to the reconstructed atlas buffer 102. These reconstructed atlas regions are read by the MIV encoder 111 that uses them to predict and encode 32 residual data for the second region of the geometry and texture atlases. This second region containing residual data is then encoded 33 by the video encoder 101. This process continues until the last region (n) is predicted and packed 34 by the MIV encoder 111 so that the video encoder 101 can finalize 35 the encoding of the current geometry and texture atlases frame. Then the MIV encoder 111 and video encoder 101 process the next temporal frame. The MIV decoder 311 already uses as input the reconstructed geometry and atlas buffers from the video decoder 301 and does not require specific orchestration as for the encoding stage; it however receives signalling of MIV prediction references so that it can reconstruct actual values from the encoded residual data.

Fig. 3b illustrates predictive MIV atlases with independently coded regions. On the left, a schematic view of a MIV pruning graph with basic views 40 as cross-hatched blocks and additional views 41 (patches) as diagonally hatched blocks are illustrated. The pruning graph nodes are clustered in different regions that map (dotted arrows) to different regions of the atlases illustrated on the right. In this example, two atlases C00, C01 are encoded for geometry and attribute data. Basic views, the ancestor nodes of the pruning graph, are packed into a separate region 42 than subsequent clusters of views, which may be stored e.g. to one or more other regions 43. The idea being that the sequential encoding of regions of the atlas follows the dependencies defined by the pruning graph.

The MIV encoder 111 and MIV decoder 311 utilize specific signalling to indicate that the predictive MIV is enabled, and to enable a symmetric, identical prediction at the encoder 100 and the decoder 300. To keep the MIV encoder 111 agnostic of the video codec used, an additional syntax is defined for signalling that a patch is encoded predictively and which reference(s) it uses. The references follow the pruning graph hierarchical structure and use one or a list of view indexes. Additionally, an SEI message can be optionally defined for identifying the mapping between view indexes and their corresponding atlas identifier and the top left coordinate of their corresponding region in that atlas.

The Table A shows a MIV atlas sequence parameter set in accordance with an embodiment.

Table A MIV atlas sequence parameter set

| asps_miv_extension( ) { | Descriptor |
|---|---|
| **asme_ancillary_atlas_flag** | u(1) |
| **asme_embedded_occupancy_enabled_flag** | u(1) |
| if( asme_embedded_occupancy_enabled_flag ) | |

| | |
|---|---|
| **asme_depth_occ_threshold_flag** | u(1) |
| asme_geometry_scale_enabled_flag | u(1) |
| if( asme_geometry_scale_enabled_flag ) { | |
| **asme_geometry_scale_factor_x_minus1** | ue(v) |
| **asme_geometry_scale_factor_y_minus1** | ue(v) |
| } | |
| if( !asme_embedded_occupancy_enabled_flag ) | |
| **asme_occupancy_scale_enabled_flag** | u(1) |
| if( !asme_embedded_occupancy_enabled_flag && asme_occupancy_scale_enabled_flag ) { | |
| **asme_occupancy_scale_factor_x_minus1** | ue(v) |
| **asme_occupancy_scale_factor_y_minus1** | ue(v) |
| } | |
| **asme_patch_constant_depth_flag** | u(1) |
| **asme_patch_attribute_offset_enabled_flag** | u(1) |
| if( asme_patch_attribute_offset_enabled_flag ) | |
| **asme_patch_attribute_offset_bit_depth_minus1** | ue(v) |
| **asme_max_entity_id** | ue(v) |
| **asme_inpaint_enabled_flag** | u(1) |
| **asme_predictive_geometry_enabled_flag** | u(1) |
| if( asme_predictive_geometry_enabled_flag ) | |
| **asme_predictive_attributes_enabled_flag** | u(1) |
| } | |

The flag **asme_predictive_geometry_enabled_flag** signals, if set, that predictive MIV mechanisms are used for geometry.

The flag **asme_predictive_attributes_enabled_flag** signals, if set, that predictive MIV mechanisms are used for attributes. It should be noted that in this embodiment this flag cannot be set if the above mentioned flag *asme_predictive_geometry_enabled_flag* is not set.

The pruning graph information is provided in the miv_view_params_list(), if the mvp_pruning_graph_params_present flag is set. For each view, it is possible to infer its ancestors with the pruning parents syntax pruning_parents(view_id) as defined in MIV.

For each patch, a flag is added to signal it is predicted, as well as the reference views to be selected for building the reference geometry and optionally reference texture/attribute of this patch.

A flag may be indicated by one bit, as is shown in Table A, wherein when the value of the bit is 1, it may be determined that the flag is set. If the value of the flag is 0, it may be determined that the flag is not set. However, this is just an example and another values of the flag may be used that it is set (e.g. 0) and, respectively, it is not set (e.g. 1).

The Table B shows a MIV patch data unit in accordance with an embodiment.

Table B MIV patch data unit

| pdu_miv_extension( tileID, p ) { | Descriptor |
|---|---|
| if(asme_max_entity_id > 0 ) | |
| **pdu_entity_id**[ tileID ][ p ] | u(v) |
| if( asme_depth_occ_threshold_flag ) | |
| **pdu_depth_occ_threshold**[ tileID ][ p ] | u(v) |
| if( asme_patch_attribute_offset_enabled_flag ) | |
| for( c = 0; c < 3; c++ ) { | |
| **pdu_attribute_offset**[ tileID ][ p ][ c ] | u(v) |
| if( asme_inpaint_enabled_flag ) | |
| **pdu_inpaint_flag**[ tileID ][ p ] | u(1) |
| if(asme_predictive_geometry_enabled_flag) | |
| **pdu_reference_view_list_minus1**[tileID][p] | u(2) |
| for( i = 0; i <= pdu_reference_view_list_minus1[tileID][p]; i++ ){ | |
| **pdu_reference_viewID**[i] | u(16) |
| } | |

The syntax element **pdu_reference_view_list_minus1[tileID][p]** signals the number of reference views used for the predictive geometry process. In order to limit the amount of signalling per patch, the number of references may be chosen by a construction, for example, between 0 and 3, but could be extended to larger numbers if necessary.

Each reference view i of this patch is then signalled by **pdu_reference_viewID[i].**

One can derive a similar syntax for attribute prediction. Other syntax choices can be chosen to signal the technique described in this specification, and the aforementioned syntax elements are provided as an example.

The MIV packer packs patches based on their viewID into the atlases. According to the chosen mapping between views and regions of the atlas, the MIV encoder 111 fills this region with the available patches, i.e. as in the reference MIV encoding process but where the coordinates of the patch in the atlas should be inside their corresponding atlas region.

The MIV encoder 111 and the MIV decoder 311 build a reference geometry as follows, in accordance with an embodiment. Knowing the number N **(pdu_reference_view_list_minusl[tileID][p])** and the indexes refViewIDs **(pdu_reference_viewID[i])** of the reference views chosen for the current patch p, the encoder 100 or decoder 300 fetches geometry data from the reference views, use the corresponding view parameters to perform the warping from the reference view extrinsic positions towards the current patch view id extrinsic so as to build a reference geometry signal.

The prediction process is illustrated in Fig. 3a and detailed hereafter for the MIV encoder and MIV decoder respectively.

The MIV encoder then subtracts this reference geometry signal from the original view geometry of the current patch view, and the resulting residual data is written in the corresponding patch geometry data location in the atlas. Given the residual can have negative values, a geometry offset can be used for the patch and signalled in the patch data unit (pdu).

The MIV decoder 311 fetches residual data from the decoded and reconstructed atlas and adds the prediction signal that is built as in the encoder, based on the reference geometry that is built from the decoded reference views. The reference view ids are pruning parents of the patch view id in order to guarantee that the MIV decoder 311 has access to the reconstructed geometry data in order to perform the prediction from geometry data and not from residual data. Several conditions can be set at the encoder to make sure that reference view ids being used by the patches of a given viewID belong to a region that is previously encoded and reconstructed.

The process is the same for attribute data prediction. First, reference geometry information is constructed, and second, the reference attribute signal is taken as either the attribute value of the reference (if there is only one reference) or the average of the attribute values of the chosen references if there are more than one reference. Other choices are possible, such as blending of the attribute values, or weighted blending, which need to be signalled in the MIV bitstream.

Several embodiments are described hereafter for different types of codecs.

Predictive MIV and HEVC Tiles

In the following an embodiment based on MIV and a codec such as HEVC that contains tiles will be described. Such tiles come with the following feature: there is no intra prediction between tiles in the same temporal frame, but there is no limitation set by tiles for motion compensation to reference reconstructed frames. This embodiment can be described by Figs. 3a and 3b. A mapping is created between the MIV pruning graph and the tiling of the MIV atlases. In one example, basic views are mapped to one region of the atlases so that the basic views can be directly used for prediction in the processing of additional views. Fig. 3a illustrates that the tile corresponding to the basic views is encoded first and that the video encoder 101 releases the corresponding reconstructed geometry and texture atlas tile in the shared reconstructed atlas buffer 102 as input of the predictive MIV encoder 111. It is possible to configure the extent of the tile by knowing the number of basic views and their resolution. This data can be used by the MIV encoder 111 to define the resolution and number of atlases per attribute. It is an encoding choice to define the total number of tiles. A small number of tiles leads to a faster encoding as there is less sequential processing between the MIV encoder and video encoder to finish encoding an atlas frame, however, the reference geometry can then only be built from a limited number of views. A larger number of tiles, for example one per node of the pruning graph, would enable to construct the best reference geometry and reference texture for any patch, but would lead to many sequential intercommunication between the MIV encoder 111 and video encoder 101.

Some good encoding choices are as follows. If tiles match basic views resolution, then each basic view can be predictively encoded from previously encoded basic views. This can lead to a substantial reduction of bitrate. On the other hand, grouping several additional views per tile is less impacting bitrate as far as basic views and reconstructed previous nodes generate good predictions. This is basically content-dependent.

One attention point is that if there is a video codec loop filter that crosses tile borders, then this can lead to minor drift. It is possible to disable such filtering or adapt the parameters in order to mitigate such drift.

Decoding behaves symmetrically to the encoding. The HEVC decoder 301 provides tiles with possibly residual data to the MIV decoder 311 that sums the prediction based on the reference geometry derived from the signalled reference views on a patch basis.

Predictive MIV and VVC subpictures

In this embodiment, subpictures provided by VVC are particularly well adapted for the proposed MIV predictions as subpictures are independently encoded and decoded even temporally. The process is very similar to the HEVC tiles, subpictures are defined based on the chosen number of view clusters derived from the pruning graph. Compared to HEVC one can design more subpictures without impacting the encoding speed as these regions are strictly independent.

Predictive MIV and SHVC

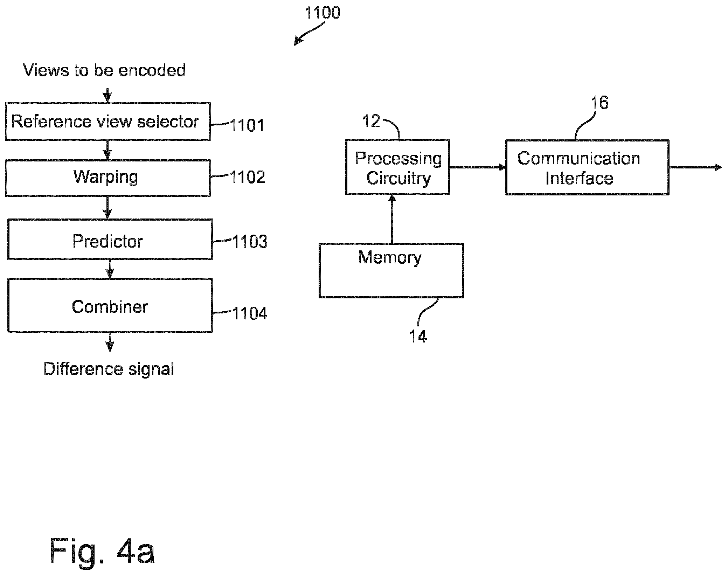

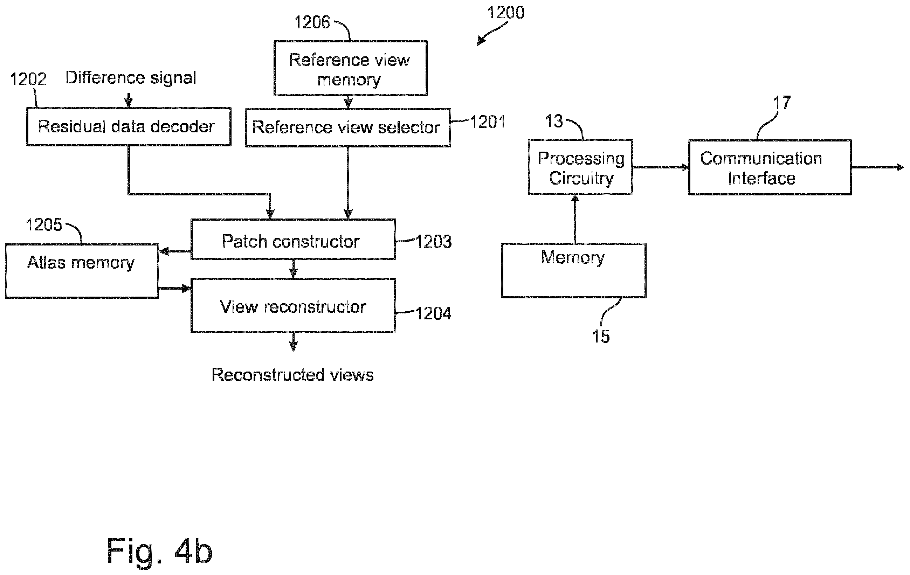

In this embodiment, each view cluster is defined as a layer, the choice of mapping between views and layers need to be made so as to avoid the information in layers is not too sparse. The mapping of views to layers must be made in a way that the pruning graph dependencies are coherent with the SHVC layer dependencies. Then the encoding and decoding order of layers needs to be orchestrated in a similar manner as in Fig 4, but where "regions" needs to be read as "layers". An example mapping of view clusters to layers could map one basic view in the first layer, two basic views in the second layer and all additional views in a third layer. An advantage of a layered codec is that it is built and designed to encode residual data in layers being predicted by other layers, which is particularly relevant for the proposed predictive MIV scheme.

Predictive MIV and layered VVC

Similarly to the previous two embodiments, using layered VVC enables to combine both subpictures and a layered representation. This enables more freedom to map views to different regions, for example, when a scene has more than one pruning graph, then one can make sure the corresponding two pruning graph view data are always mapped to different subpictures, while clusters of the same pruning graph can be mapped to different layers.

The phrase along the bitstream (e.g. indicating along the bitstream) may be defined to refer to out-of-band transmission, signalling, or storage in a manner that the out-of-band data is associated with the bitstream. The phrase decoding along the bitstream or alike may refer to decoding the referred out-of-band data (which may be obtained from out-of-band transmission, signalling, or storage) that is associated with the bitstream. For example, an indication along the bitstream may refer to metadata in a container file that encapsulates the bitstream.

Various embodiments may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present invention. Thus, use of any such terms should not be taken to limit the spirit and scope of embodiments of the present invention.

As used herein, the term 'circuitry' may refer to one or more or all of the following: (a) hardware-only circuit implementations (such as implementations in analog circuitry and/or digital circuitry); (b) combinations of circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and/or processor(s), such as a microprocessor(s) or a portion of a microprocessor(s), that requires software (e.g., firmware) for operation, but the software may not be present when needed for operation. This definition of 'circuitry' applies to all uses of this term in this application, including in any claims. As a further example, as used in this application, the term 'circuitry' also covers an implementation of merely a hardware circuit or processor (or multiple processors) or portions of a hardware circuit or processor and its (or their) accompanying software and/or firmware. The term 'circuitry' also covers, for example and if applicable to the particular claim element, a baseband integrated circuit or processor integrated circuit for a mobile phone or a similar integrated circuit in a server, a cellular network device or other computing or network device.

As defined herein, a "computer-readable storage medium," which refers to a physical storage medium (e.g., volatile or non-volatile memory device), may be differentiated from a "computer-readable transmission medium," which refers to an electromagnetic signal.

As described herein, certain example embodiments generally relate to encoding of volumetric video for compression and a definition of metadata structures and compression methods for individual volumetric video components. For example, a character or scene captured with a set of depth cameras, or a synthetically modelled and animated 3D scene are examples of 3D content that can be encoded as volumetric video. Approaches for volumetric video compression often include segmenting the 3D content into a set of 2D patches containing attributes such as one of a color attribute, a depth attribute, a geometry attribute, a reflectance attribute, a roughness attribute, a transparency attribute, a metalness attribute, a specularity attribute, a surface normals attribute, a material attribute of the volumetric video scene, and the like, which can then be compressed using a standard 2D video compression format. Thus, attributes, e.g., color and geometry data, can be considered as components of volumetric video. Volumetric video compression is currently being explored and standardized as part of the MPEG-I Point Cloud Compression (PCC) and MPEG-I Immersive Video (MIV) efforts, for example.

Some approaches rely on 3D scene segmentation to generate views that can be packed into atlases and efficiently encoded using existing 2D compression technologies, such as H.265 or H.264. Some current specifications define similar metadata structures while setting limits to patch packing strategies by defining shared patch layouts for all components (attributes such as one of a color attribute, a depth attribute, a geometry attribute, a reflectance attribute, a roughness attribute, a transparency attribute, a metalness attribute, a specularity attribute, a surface normals attribute, a material attribute of the volumetric video scene, and the like) of volumetric video. In some embodiments of the current disclosure, some structures for a metadata format can enable application of different atlas packing methods for different components of 3D video, thus resulting in significantly smaller atlas sizes and overall bitrates. In some embodiments, associated methods can be applied for individual volumetric video components.

In some embodiments, an apparatus can be configured to carry out some or all portions of any of the methods described herein. The apparatus may be embodied by any of a wide variety of devices including, for example, a video codec. A video codec includes an encoder that transforms input video into a compressed representation suited for storage and/or transmission and/or a decoder that can decompress the compressed video representation to result in a viewable form of a video. Typically, the encoder discards some information from the original video sequence to represent the video in a more compact form, such as at a lower bit rate. As an alternative to a video codec, the apparatus may, instead, be embodied by any of a wide variety of computing devices including, for example, a video encoder, a video decoder, a computer workstation, a server or the like, or by any of various mobile computing devices, such as a mobile terminal, e.g., a smartphone, a tablet computer, a video game player, etc. Alternatively, the apparatus may be embodied by an image capture system configured to capture the images that comprise the volumetric video data.

Regardless of the video codec or other type of computing device that embodies the apparatus, some elements of an encoding apparatus 1100 of an example embodiment is depicted in Fig. 4a and includes, is associated with, or is otherwise in communication with processing circuitry 12, a memory 14 and a communication interface 16. The processing circuitry may be in communication with the memory device via a bus for passing information among components of the apparatus. The memory device may be non-transitory and may include, for example, one or more volatile and/or non-volatile memories. In other words, for example, the memory device may be an electronic storage device (e.g., a computer readable storage medium) comprising gates configured to store data (e.g., bits) that may be retrievable by a machine (e.g., a computing device like the processing circuitry). The memory device may be configured to store information, data, content, applications, instructions, or the like for enabling the apparatus to carry out various functions in accordance with an example embodiment of the present disclosure. For example, the memory device could be configured to buffer input data for processing by the processing circuitry. Additionally or alternatively, the memory device could be configured to store instructions for execution by the processing circuitry.

The apparatus 1100 may comprise a reference view selector 1101, a warping arrangement 1102, a predictor 1103, and a combiner 1104 for implementing the processes described above. These elements may be implemented in the memory, as a computer code and/or by dedicated circuitry.

Some elements of a decoding apparatus 1200 of an example embodiment is depicted in Fig. 4b and includes, is associated with, or is otherwise in communication with processing circuitry 13, a memory 15 and a communication interface 17. The processing circuitry may be in communication with the memory device via a bus for passing information among components of the apparatus. The memory device may be non-transitory and may include, for example, one or more volatile and/or non-volatile memories. In other words, for example, the memory device may be an electronic storage device (e.g., a computer readable storage medium) comprising gates configured to store data (e.g., bits) that may be retrievable by a machine (e.g., a computing device like the processing circuitry). The memory device may be configured to store information, data, content, applications, instructions, or the like for enabling the apparatus to carry out various functions in accordance with an example embodiment of the present disclosure. For example, the memory device could be configured to buffer input data for processing by the processing circuitry. Additionally or alternatively, the memory device could be configured to store instructions for execution by the processing circuitry.

The apparatus 1200 may comprise a residual data decoder 1201, a reference view selector 1202, a patch constructor 1203, and a view reconstructor 1204 for implementing the processes described above. These elements may be implemented in the memory, as a computer code and/or by dedicated circuitry. There may also be an atlas memory 1205 and/or a reference view memory 1206, which may be implemented in the memory device 15, for example.

The apparatuses 1100, 1200 may, in some embodiments, be embodied in various computing devices as described above. However, in some embodiments, the apparatus may be embodied as a chip or chip set. In other words, the apparatus may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus may therefore, in some cases, be configured to implement an embodiment of the present invention on a single chip or as a single "system on a chip." As such, in some cases, a chip or chipset may constitute means for performing one or more operations for providing the functionalities described herein.

The processing circuitry 12, 13 may be embodied in a number of different ways. For example, the processing circuitry may be embodied as one or more of various hardware processing means such as a coprocessor, a microprocessor, a controller, a digital signal processor (DSP), a processing element with or without an accompanying DSP, or various other circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processing circuitry may include one or more processing cores configured to perform independently. A multi-core processing circuitry may enable multiprocessing within a single physical package. Additionally or alternatively, the processing circuitry may include one or more processors configured in tandem via the bus to enable independent execution of instructions, pipelining and/or multithreading.

In an example embodiment, the processing circuitry 12, 13 may be configured to execute instructions stored in the memory device 14, 15 or otherwise accessible to the processing circuitry. Alternatively or additionally, the processing circuitry may be configured to execute hard coded functionality. As such, whether configured by hardware or software methods, or by a combination thereof, the processing circuitry may represent an entity (e.g., physically embodied in circuitry) capable of performing operations according to an embodiment of the present disclosure while configured accordingly. Thus, for example, when the processing circuitry is embodied as an ASIC, FPGA or the like, the processing circuitry may be specifically configured hardware for conducting the operations described herein. Alternatively, as another example, when the processing circuitry is embodied as an executor of instructions, the instructions may specifically configure the processor to perform the algorithms and/or operations described herein when the instructions are executed. However, in some cases, the processing circuitry may be a processor of a specific device (e.g., an image or video processing system) configured to employ an embodiment of the present invention by further configuration of the processing circuitry by instructions for performing the algorithms and/or operations described herein. The processing circuitry may include, among other things, a clock, an arithmetic logic unit (ALU) and logic gates configured to support operation of the processing circuitry.

The communication interface 16, 17 may be any means such as a device or circuitry embodied in either hardware or a combination of hardware and software that is configured to receive and/or transmit data, including visual content in the form of video or image files, one or more audio tracks or the like. In this regard, the communication interface may include, for example, an antenna (or multiple antennas) and supporting hardware and/or software for enabling communications with a wireless communication network. Additionally or alternatively, the communication interface may include the circuitry for interacting with the antenna(s) to cause transmission of signals via the antenna(s) or to handle receipt of signals received via the antenna(s). In some environments, the communication interface may alternatively or also support wired communication. As such, for example, the communication interface may include a communication modem and/or other hardware/software for supporting communication via cable, digital subscriber line (DSL), universal serial bus (USB) or other mechanisms.

An attribute picture may be defined as a picture that comprises additional information related to an associated texture picture. An attribute picture may for example comprise surface normal, opacity, or reflectance information for a texture picture. A geometry picture may be regarded as one type of an attribute picture, although a geometry picture may be treated as its own picture type, separate from an attribute picture.

Texture picture(s) and the respective geometry picture(s), if any, and the respective attribute picture(s) may have the same or different chroma format.

Terms texture image, texture picture and texture component picture may be used interchangeably. Terms geometry image, geometry picture and geometry component picture may be used interchangeably. A specific type of a geometry image is a depth image. Embodiments described in relation to a geometry image equally apply to a depth image, and embodiments described in relation to a depth image equally apply to a geometry image. Terms attribute image, attribute picture and attribute component picture may be used interchangeably. A geometry picture and/or an attribute picture may be treated as an auxiliary picture in video/image encoding and/or decoding.

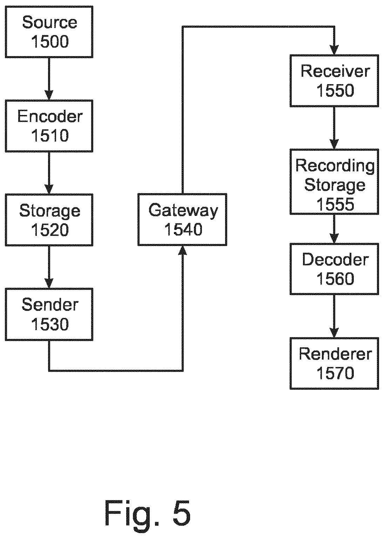

Fig. 5 shows a schematic diagram of an example multimedia communication system within which various embodiments may be implemented. A data source 1500 provides a source signal in an analog, uncompressed digital, or compressed digital format, or any combination of these formats. An encoder 1510 may include or be connected with a pre-processing, such as data format conversion and/or filtering of the source signal. The encoder 1510 encodes the source signal into a coded media bitstream. It should be noted that a bitstream to be decoded may be received directly or indirectly from a remote device located within virtually any type of network. Additionally, the bitstream may be received from local hardware or software. The encoder 1510 may be capable of encoding more than one media type, such as audio and video, or more than one encoder 1510 may be required to code different media types of the source signal. The encoder 1510 may also get synthetically produced input, such as graphics and text, or it may be capable of producing coded bitstreams of synthetic media. In the following, only processing of one coded media bitstream of one media type is considered to simplify the description. It should be noted, however, that typically real-time broadcast services comprise several streams (typically at least one audio, video and text sub-titling stream). It should also be noted that the system may include many encoders, but in the figure only one encoder 1510 is represented to simplify the description without a lack of generality. It should be further understood that, although text and examples contained herein may specifically describe an encoding process, one skilled in the art would understand that the same concepts and principles also apply to the corresponding decoding process and vice versa.

The coded media bitstream may be transferred to a storage 1520. The storage 1520 may comprise any type of mass memory to store the coded media bitstream. The format of the coded media bitstream in the storage 1520 may be an elementary self-contained bitstream format, or one or more coded media bitstreams may be encapsulated into a container file, or the coded media bitstream may be encapsulated into a Segment format suitable for DASH (or a similar streaming system) and stored as a sequence of Segments. If one or more media bitstreams are encapsulated in a container file, a file generator (not shown in the figure) may be used to store the one more media bitstreams in the file and create file format metadata, which may also be stored in the file. The encoder 1510 or the storage 1520 may comprise the file generator, or the file generator is operationally attached to either the encoder 1510 or the storage 1520. Some systems operate "live", i.e. omit storage and transfer coded media bitstream from the encoder 1510 directly to the sender 1530. The coded media bitstream may then be transferred to the sender 1530, also referred to as the server, on a need basis. The format used in the transmission may be an elementary self-contained bitstream format, a packet stream format, a Segment format suitable for DASH (or a similar streaming system), or one or more coded media bitstreams may be encapsulated into a container file. The encoder 1510, the storage 1520, and the server 1530 may reside in the same physical device or they may be included in separate devices. The encoder 1510 and server 1530 may operate with live real-time content, in which case the coded media bitstream is typically not stored permanently, but rather buffered for small periods of time in the content encoder 1510 and/or in the server 1530 to smooth out variations in processing delay, transfer delay, and coded media bitrate.

The server 1530 sends the coded media bitstream using a communication protocol stack. The stack may include but is not limited to one or more of Real-Time Transport Protocol (RTP), User Datagram Protocol (UDP), Hypertext Transfer Protocol (HTTP), Transmission Control Protocol (TCP), and Internet Protocol (IP). When the communication protocol stack is packet-oriented, the server 1530 encapsulates the coded media bitstream into packets. For example, when RTP is used, the server 1530 encapsulates the coded media bitstream into RTP packets according to an RTP payload format. Typically, each media type has a dedicated RTP payload format. It should be again noted that a system may contain more than one server 1530, but for the sake of simplicity, the following description only considers one server 1530.

If the media content is encapsulated in a container file for the storage 1520 or for inputting the data to the sender 1530, the sender 1530 may comprise or be operationally attached to a "sending file parser" (not shown in the figure). In particular, if the container file is not transmitted as such but at least one of the contained coded media bitstream is encapsulated for transport over a communication protocol, a sending file parser locates appropriate parts of the coded media bitstream to be conveyed over the communication protocol. The sending file parser may also help in creating the correct format for the communication protocol, such as packet headers and payloads. The multimedia container file may contain encapsulation instructions, such as hint tracks in the ISOBMFF, for encapsulation of the at least one of the contained media bitstream on the communication protocol.

The server 1530 may or may not be connected to a gateway 1540 through a communication network, which may e.g. be a combination of a CDN, the Internet and/or one or more access networks. The gateway may also or alternatively be referred to as a middle-box. For DASH, the gateway may be an edge server (of a CDN) or a web proxy. It is noted that the system may generally comprise any number gateways or alike, but for the sake of simplicity, the following description only considers one gateway 1540. The gateway 1540 may perform different types of functions, such as translation of a packet stream according to one communication protocol stack to another communication protocol stack, merging and forking of data streams, and manipulation of data stream according to the downlink and/or receiver capabilities, such as controlling the bit rate of the forwarded stream according to prevailing downlink network conditions. The gateway 1540 may be a server entity in various embodiments.

The system includes one or more receivers 1550, typically capable of receiving, demodulating, and de-capsulating the transmitted signal into a coded media bitstream. The coded media bitstream may be transferred to a recording storage 1555. The recording storage 1555 may comprise any type of mass memory to store the coded media bitstream. The recording storage 1555 may alternatively or additively comprise computation memory, such as random access memory. The format of the coded media bitstream in the recording storage 1555 may be an elementary self-contained bitstream format, or one or more coded media bitstreams may be encapsulated into a container file. If there are multiple coded media bitstreams, such as an audio stream and a video stream, associated with each other, a container file is typically used and the receiver 1550 comprises or is attached to a container file generator producing a container file from input streams. Some systems operate "live," i.e. omit the recording storage 1555 and transfer coded media bitstream from the receiver 1550 directly to the decoder 1560. In some systems, only the most recent part of the recorded stream, e.g., the most recent 10-minute excerption of the recorded stream, is maintained in the recording storage 1555, while any earlier recorded data is discarded from the recording storage 1555.

The coded media bitstream may be transferred from the recording storage 1555 to the decoder 1560. If there are many coded media bitstreams, such as an audio stream and a video stream, associated with each other and encapsulated into a container file or a single media bitstream is encapsulated in a container file e.g. for easier access, a file parser (not shown in the figure) is used to decapsulate each coded media bitstream from the container file. The recording storage 1555 or a decoder 1560 may comprise the file parser, or the file parser is attached to either recording storage 1555 or the decoder 1560. It should also be noted that the system may include many decoders, but here only one decoder 1560 is discussed to simplify the description without a lack of generality

The coded media bitstream may be processed further by a decoder 1560, whose output is one or more uncompressed media streams. Finally, a renderer 1570 may reproduce the uncompressed media streams with a loudspeaker or a display, for example. The receiver 1550, recording storage 1555, decoder 1560, and renderer 1570 may reside in the same physical device or they may be included in separate devices.

A sender 1530 and/or a gateway 1540 may be configured to perform switching between different representations e.g. for switching between different viewports of 360-degree video content, view switching, bitrate adaptation and/or fast start-up, and/or a sender 1530 and/or a gateway 1540 may be configured to select the transmitted representation(s). Switching between different representations may take place for multiple reasons, such as to respond to requests of the receiver 1550 or prevailing conditions, such as throughput, of the network over which the bitstream is conveyed. In other words, the receiver 1550 may initiate switching between representations. A request from the receiver can be, e.g., a request for a Segment or a Subsegment from a different representation than earlier, a request for a change of transmitted scalability layers and/or sublayers, or a change of a rendering device having different capabilities compared to the previous one. A request for a Segment may be an HTTP GET request. A request for a Subsegment may be an HTTP GET request with a byte range. Additionally or alternatively, bitrate adjustment or bitrate adaptation may be used for example for providing so-called fast start-up in streaming services, where the bitrate of the transmitted stream is lower than the channel bitrate after starting or random-accessing the streaming in order to start playback immediately and to achieve a buffer occupancy level that tolerates occasional packet delays and/or retransmissions. Bitrate adaptation may include multiple representation or layer up-switching and representation or layer down-switching operations taking place in various orders.

A decoder 1560 may be configured to perform switching between different representations e.g. for switching between different viewports of 360-degree video content, viewpoint switching, bitrate adaptation and/or fast start-up, and/or a decoder 1560 may be configured to select the transmitted representation(s). Switching between different representations may take place for multiple reasons, such as to achieve faster decoding operation or to adapt the transmitted bitstream, e.g. in terms of bitrate, to prevailing conditions, such as throughput, of the network over which the bitstream is conveyed. Thus, the decoder may comprise means for requesting at least one decoder reset picture of the second representation for carrying out bitrate adaptation between the first representation and a third representation. Faster decoding operation might be needed for example if the device including the decoder 1560 is multi-tasking and uses computing resources for other purposes than decoding the video bitstream. In another example, faster decoding operation might be needed when content is played back at a faster pace than the normal playback speed, e.g. twice or three times faster than conventional real-time playback rate.

In the above, some embodiments have been described with reference to encoding. It needs to be understood that said encoding may comprise one or more of the following: encoding source image data into a bitstream, encapsulating the encoded bitstream in a container file and/or in packet(s) or stream(s) of a communication protocol, and announcing or describing the bitstream in a content description, such as the Media Presentation Description (MPD) of ISO/IEC 23009-1 (known as MPEG-DASH) or the IETF Session Description Protocol (SDP). Similarly, some embodiments have been described with reference to decoding. It needs to be understood that said decoding may comprise one or more of the following: decoding image data from a bitstream, decapsulating the bitstream from a container file and/or from packet(s) or stream(s) of a communication protocol, and parsing a content description of the bitstream,

In the above, where the example embodiments have been described with reference to an encoder or an encoding method, it needs to be understood that the resulting bitstream and the decoder or the decoding method may have corresponding elements in them. Likewise, where the example embodiments have been described with reference to a decoder, it needs to be understood that the encoder may have structure and/or computer program for generating the bitstream to be decoded by the decoder.

In general, the various embodiments of the invention may be implemented in hardware or special purpose circuits or any combination thereof. While various aspects of the invention may be illustrated and described as block diagrams or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre stored design modules. Once the design for a semiconductor circuit has been completed, the resultant design, in a standardized electronic format (e.g., Opus, GDSII, or the like) may be transmitted to a semiconductor fabrication facility or "fab" for fabrication.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended examples. However, all such and similar modifications of the teachings of this invention will still fall within the scope of this invention.

## Claims

1. An apparatus for encoding comprising means for:

   obtaining a basic view and one or more additional views of a volumetric video content;
   forming patches from the basic view and one or more additional views;
   packing patches into one or more regions of an atlas;
   encoding the one or more regions of the atlas;
   reconstructing patches from the encoded atlas;
   selecting a reference view;
   forming residual data based on the reconstructed patches and the reference view; and

encoding the residual data.

2. The apparatus according to claim 1, said means for forming residual data comprising:
forming geometry residual data and texture residual data.

3. The apparatus according to claim 1 or 2 comprising means for:
signaling whether geometry residual data is used in encoding.

4. The apparatus according to any of claims 1 to 3 comprising means for:
warping the reference view towards a geometry of a view to be encoded.

5. The apparatus according to claim 4 comprising means for:
obtaining one or more parameters of a camera which captured the views to be encoded for warping.

6. The apparatus according to any of the claims 1 to 5 comprising means for:
packing the basic view into a first region and packing subsequent clusters of the one or more other views to one or more other regions.

7. The apparatus according to any of the claims 1 to 6 comprising means for:

obtaining attribute data related to the basic view and one or more additional views; and
forming prediction data of the attribute data, when geometry residual data is formed.

8. A method for encoding comprising:

obtaining a basic view and one or more additional views of a volumetric video content;
forming patches from the basic view and one or more additional views;
packing patches into one or more regions of an atlas;
encoding the one or more regions of the atlas;
reconstructing patches from the encoded atlas;
selecting a reference view;
forming residual data based on the reconstructed patches and the reference view; and
encoding the residual data.

9. The method according to claim 8, wherein forming residual data based on the reconstructed patches and the reference view further comprises:
forming geometry residual data and texture residual data.

10. An apparatus for decoding comprising means for:

decoding residual data regarding reconstructed patches and a reference view;
obtaining the reference view;
forming patches of an atlas from the decoded residual data and the reference view; and
reconstructing a basic view and one or more additional views of a volumetric video content from the patches.

11. The apparatus according to claim 10 comprising means for:
decoding the residual data from encoded atlases.

12. The apparatus according to claim 10 or 11 comprising means for:
receiving information of the reference view selected for encoding a current view.

13. The apparatus according to any of claims 10 to 12 comprising means for: warping the reference view towards a geometry of a view to be decoded.

14. The apparatus according to any of the claims 10 to 13 comprising means for:
retrieving the basic view from a first region and retrieving subsequent clusters of one or more other views from one or more other regions.

**15.** A method for decoding comprising:

decoding residual data regarding reconstructed patches and a reference view;
obtaining the reference view;
forming patches of an atlas from the decoded residual data and the reference view; and
reconstructing a basic view and one or more additional views of a volumetric video content from the patches.

Fig. 1

Reference
geometry

View V
camera
parameters → | pred |

231

Geometry
of view V → (230) + − → Delta_geo

**Fig. 2a**

Reference          Reference
geometry           texture

View V
camera
parameters → | pred |

233

Texture
of view V → (232) + − → Delta_tex

**Fig. 2b**

Reference
geometry

View V
camera
parameters → pred

235

Delta_geo → + (234) → Geometry
of view V

**Fig. 2c**

Reference          Reference
geometry           texture

View V
camera
parameters → pred

237

Delta_tex → + (236) → Texture
of view V

**Fig. 2d**

30

Packing

Geometry Atlas Region 1
Texture Atlas Region 1

31

Encoding and region reconstruction

Reconstr. Geo Atlas Region 1
Reconstr. Text Atlas Region 1

32

Prediction and Packing

Geometry Atlas Region 2
Texture Atlas Region 2

33

Encoding and region reconstruction

Reconstr. Geo Atlas Region 2
Reconst. Text Atlas Region 2

34

Prediction and Packing

Geometry Atlas Region n
Texture Atlas Region n

35

Encoding and region reconstruction
Geometry Atlas frame encoding finalized
Texture Atlas frame encoding finalized

Fig. 3a

EP 4 207 764 A1

Pruning Graph

Atlas and corresponding VVC subpictures

BASIC VIEWS

ADDITIONAL
VIEWS
PATCHES

40  40

42

41

41

43

43

43

43

Atlas C00

Atlas C01

Fig. 3b

1100

Views to be encoded

| Reference view selector | —1101 |

| Warping | —1102 |

| Predictor | —1103 |

| Combiner | —1104 |

Difference signal

12

| Processing Circuitry |

16

| Communication Interface |

| Memory |

14

# Fig. 4a

Fig. 4b

Fig. 5

Europäisches
Patentamt

European
Patent Office

Office européen
des brevets

# EUROPEAN SEARCH REPORT

Application Number

EP 22 21 3754

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BOYCE JILL M. ET AL: "MPEG Immersive Video Coding Standard", PROCEEDINGS OF THE IEEE, 1 January 2021 (2021-01-01), pages 1-16, XP055824808, US ISSN: 0018-9219, DOI: 10.1109/JPROC.2021.3062590 * abstract * * Section II * * Section III-A * * figure 3 * | 1-15 | INV. H04N19/597 H04N19/70 |
| A | JEONG JONG-BEOM UOF4949@SKKU EDU ET AL: "Towards Viewport-dependent 6DoF 360 Video Tiled Streaming for Virtual Reality Systems", PROCEEDINGS OF THE 28TH ACM INTERNATIONAL CONFERENCE ON MULTIMEDIA, ACMPUB27, NEW YORK, NY, USA, 12 October 2020 (2020-10-12), pages 3687-3695, XP058478312, DOI: 10.1145/3394171.3413712 ISBN: 978-1-4503-7988-5 * abstract * * Section 3.1 * | 1-15 | |

| | |
|---|---|
| | TECHNICAL FIELDS SEARCHED (IPC) |
| | H04N |

The present search report has been drawn up for all claims

| Place of search | Date of completion of the search | Examiner |
|---|---|---|
| The Hague | 9 May 2023 | Molina Sedgwick, S |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
    ...................................................................
& : member of the same patent family, corresponding
document

EPO FORM 1503 03.82 (P04C01)